# EUROPEAN PATENT APPLICATION

(11) **EP 2 355 111 A2**
(43) Date of publication of application: **10.08.2011**
(21) Application number: 10002434.8
(22) Date of filing: 09.03.2010
(51) Int. Cl.: H01B 7/295, C08K 3/00, C08K 3/22, C08K 3/26

(54) **Cross-linked clean flame retardant wire and cable insulation compositions for enhancing mechanical properties and flame retardancy**

(30) Priority: 27.01.2010 US 694296
(71) Applicant: King Abdulaziz City for Science and Technology, Riyadh 11442 (SA)
(72) Inventor: Basfar, Ahmed, Ali, 11442 Riyadh (SA); Bae, Hun, Jai, Mississauga Ontario L4Z 4H7 (CA)
(74) Representative: Goddar, Heinz J.

(57) **Abstract**

This invention focuses on improving mechanical properties without deteriorating flame retardancy in peroxide cross-linked and radiation cross-linked thermosetting clean flame retardant compositions. Optimal mechanical properties can be obtained by modifying the ratios of MAGNIFIN H10A/Ultracarb LH 15X in peroxide crosslinked or radiation crosslinked clean flame retardant composition. Higher tensile strength can be obtained by higher MAGNIFFN H10A content, and higher elongation at break can be obtained by higher Ultracarb LH 15X content. The invented compositions show excellent mechanical properties, flame retardancy, thermal properties, electrical properties and process ability for meeting the stringent specifications of wire and cable industry. Composition is made of 100 parts by weight of resin (polyolefin or 100 parts by weight of polyolefin/EPDM), 90-150 parts by weight of MAGNIFIN H10A/Ultracarb LH 15X as main flame retardants, 1-20 parts by weight of auxiliary secondary flame retardant agents and 0.2-1.0 parts by weight of antioxidants.

## Description

### FIELD OF INVENTION

This invention relates to non toxic, halogen free thermosetting flame retardant compositions for insulation materials of wire and cable. More particularly, this invention relates to clean flame retardant compositions for increasing flame retardancy without deterioration of mechanical properties.

### BACKGROUND

Every year, the world faces huge losses in lives and property due to residential and commercial fires caused by, electrical wiring. Human lives can be lost due to high temperature flames, toxic smoke and gas that are generated from the flammable insulation materials used in wire and cable during fire.

The current population uses many equipments and gadgets that contain several wires and cables. Most wires and cables are fabricated from plastic materials that are readily flammable. Moreover, modern living involves heavy use of electric equipment containing wires and communication systems made of cables. These conditions further increase the loss of lives and properties due to bad insulation of a wire or a cable resulting in an electrical fire. Smoke and toxic fumes from poor insulation materials in wires and cables can cause irreparable health damage.

Wire and cable insulations are required to meet not only the electrical properties but also the mechanical properties. Polyethylene and polyvinylchloride compounds are some of the best materials suitable for wire and cable insulations because of their excellent electrical and mechanical properties. However, these materials have poor flame retardancy and generate toxic gases during a fire.

Wire and cable insulations are required to meet not only electrical properties but also mechanical properties standards. In general, wire and cable for electrical or electronic applications requires much higher mechanical properties compared to general grade building products. Most of jackets for general grade building wire and cable consist of thermoplastic materials while many wire and cable for electrical or electronic applications require cross-linked materials to posses' a higher thermal resistance and mechanical properties.

There is a need for a better wire and cable insulation composition that has superior mechanical and electrical properties.

### SUMMARY

The current invention is carried out to find a clean flame retardant material which does not generate toxic gases for wire and cable insulation materials during a fire. This invention further comprises of thermosetting (not thermoplastic) type clean flame retardant materials for wire and cable. High filler content in commercial cross-linkable clean flame retardant materials in wire and cable insulation applications makes them have unstable mechanical properties.

The present invention further comprises a reliable method for producing thermosetting clean flame retardant insulation materials for wire and cable without deterioration of mechanical properties and electrical properties. The cables produced by this invention may meet thermosetting clean flame retardant material specification thershold.

Higher mechanical properties can be obtained by changing the mixing ratios of MAGNIFIN H10A/Ultracarb LH 15X. They can be peroxide cross-linked or radiation cross-linked to obtain clean flame retardant compositions. Higher tensile strength can be achieved by increasing the MAGNIFIN H10A content in the composition. Higher elongation at break can be achieved by higher Ultracarb LH 15X content. The invented compositions show excellent mechanical properties, flame retardancy, thermal properties, electrical properties and process ability for meeting the stringent specifications of wire and cable industry.

In another embodiment, target mechanical properties can be obtained by changing the mixing ratios of MAGNIFIN H10A/Ultracarb LH 15X in peroxide crosslinked or radiation crosslinked clean flame retardant composition. In a specific example composition comprises of 100 parts by weight of resin (polyolefin or 100 parts by weight of polyolefin/EPDM), 90-150 parts by weight of MAGNIFIN H10A/Ultracarb LH 15X as main flame retardants, 1-20 parts by weight of auxiliary secondary flame retardant agents and 0.2-1.0 parts by weight of antioxidants.

In the invention, the composition is successfully processed by both cross-linking methods such as routine extruder/continuous cross-linking system and radiation cross-linking system. The cross-linked products by both methods show excellent mechanical properties and flame retardancy. The present invention demonstrates a reliable method for producing thermosetting clean flame retardant insulation composites for wire and cable without deterioration of mechanical properties and electrical properties.

The methods disclosed herein may be implemented in any means for achieving various aspects. Other features will be apparent from the accompanying drawings and from the detailed description that follows.

### BRIEF DESCRIPTION OF THE FIGURES

Example embodiments are illustrated by way of example and not limitation in the figures of accompanying drawings.

**Figure 1****:** SEM micrographs of MAGNIFIN H10A and Ultracarb LH 15X.

**Figure 2****:** Mechanical properties of uncrosslinked and DCP crosslinked formulations as a function of MAGNIFIN H10A content.

**Figure 3****:** Mechanical properties of uncrosslinked and DCP crosslinked formulations as a function of Ultracarb LH 15X content.

**Figure 4****:** Tensile strength as a function of flame retardant content for MAGNIFIN H10A(MH) and Ultracarb LH 15X(HH) formulations

**Figure 5****:** Elongation at break as a function of flame retardant content for various MAGNIFIN H10A(MH) and Ultracarb LH 15X(HH) formulations.

**Figure 6****:** Mechanical properties of Evaflex 360/ LLDPE 118W based peroxide cross-linked formulations as a function of MAGNIFIN H10A(M)/Ultracarb LH15X(H) mixing ratios.

**Figure 7****:** Mechanical properties of Evaflex 360/Vistalon 7001 based and carbon black loaded peroxide cross-linked formulations as a function of MAGNIFIN H10A(M)/Ultracarb LH15X(H) mixing ratios.

**Figure 8****:** Mechanical properties of Evaflex 360/ Nordel 3722P based peroxide cross-linked formulations as a function of MAGNIFIN H 10A(M)/Ultracarb LH 15X(H) mixing ratios.

**Figure 9****:** Mechanical properties of Evaflex 360/ Nordel 3722P based and carbon black loaded peroxide cross-linked formulations as a function of MAGNIFIN H10A(M)/Ultracarb LH15X(H) mixing ratios.

**Figure 10****:** Mechanical properties of Evaflex 360/ LLDPE 118W based radiation cross-linked formulations as a function of MAGNIFIN H10A(M)/Ultracarb LH15X(H) mixing ratios.

### DETAILED DESCRIPTION OF THE FIGURES

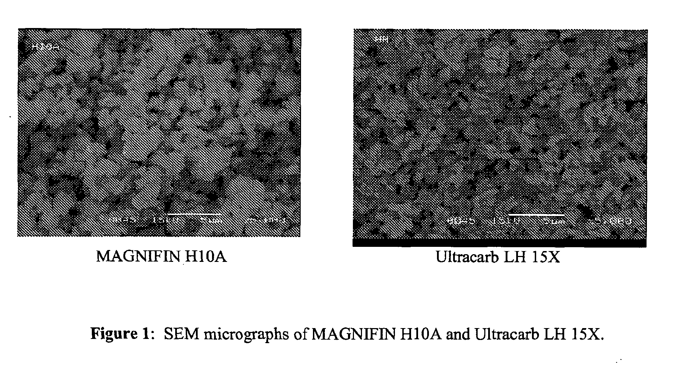

**Figure 1** shows, two different typical particle structures of flame retardants that are available. One is spherical structure of MAGNIFIN H10A and the other one is ellipsoidal structure of Ultracarb LH 15X. Scanning electron microscopy (SEM ) micrographs were taken by scanning electron microscope (Model JSM 5800) from Jeol Co., Japan. The particle size of most flame retardants used in clean flame retardant compositions are under 50µm with various typical particle structures and accordingly excellent dispersion of polymer/flame retardants is very important to obtain better mechanical properties. The selection was made using the SEM micrographs.

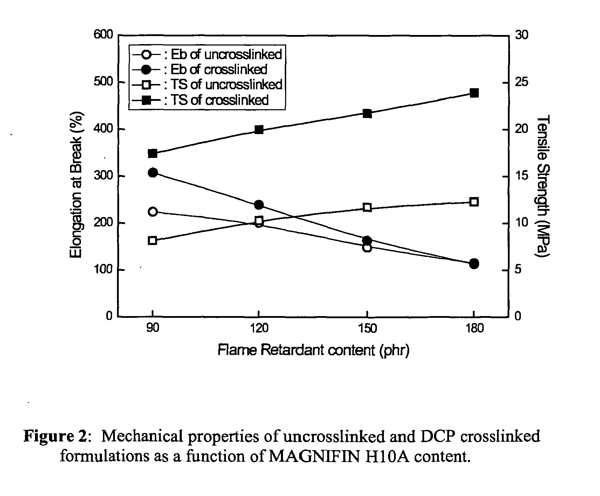

**Figure 2** shows results of mechanical properties of MAGNIFIN H10A formulations for both uncross-linked and Di cumyl peroxide (DCP) cross-linked. The results show that the tensile strength of cross-linked formulations is much higher than those of uncross-linked ones. Tensile strength increases with increase of MAGNIFIN H10A content for both uncross-linked and DCP cross-linked formulations. Tensile strength increases almost linearly over the range 90 - 180 phr (MAGNIFIN H10A) for both cases. On the other hand, elongation at break decreases with increase of MAGNIFIN H10A content for both uncross-linked and DCP crosslinked formulations. Although, elongation at break of cross-linked formulations decreases at a higher rate compared to those of uncrosslinked ones.

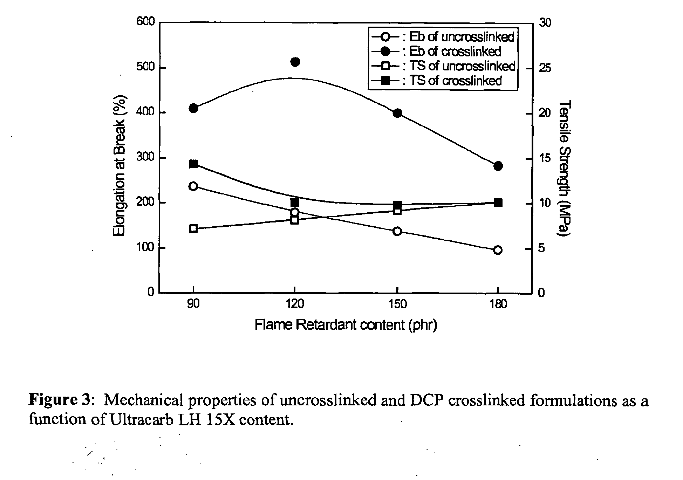

In an another experiment, as shown in **Figure 3****,** mechanical properties of formulations with Ultracarb LH 15X exhibit different properties compared to formulations with MAGNIFIN H10A. Ultracarb LH 15X contained formulations exhibit a much higher elongation at break compared to those of uncross-linked ones. The formulations with Ultracarb LH 15X content over the range 90 - 150 phr, exhibit an elongation at break of cross-linked formulations at approximately 2 times higher values than those of uncross-linked ones. On the other hand, tensile strength is slightly affected by Ultracarb LH 15X content and cross-linking. Tensile strength increases slightly with increase of MAGNIFIN H10A content above 120phr in both cases. Moreover, tensile strength of Ultracarb LH 15X formulations is much lower than those of MAGNIFIN H10A formulations.

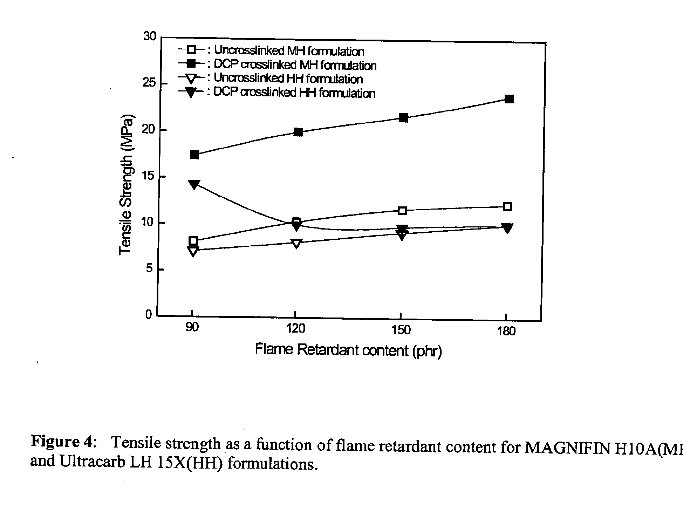

In **Figure 4****,** uncross-linked and cross-linked formulations of MAGNIFIN H10A and Ultracarb LH 15X formulations are compared. Tensile strength of MAGNIFIN H10A and Ultracarb LH 15X formulations is shown in **Figure 4****.** Tensile strength of MAGNIFIN H10A formulations is almost 2 times higher than those of Ultracarb LH 15X.

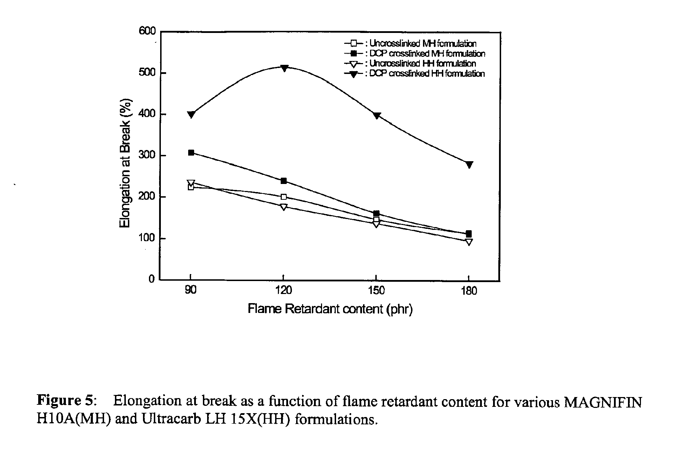

Elongation at break of MAGNIFIN H10A and Ultracarb LH 15X formulations is shown in **Figure 5****.** Elongation at break of cross-linked Ultracarb LH 15X formulations is 2-3 times higher than those of MAGNIFIN H10A formulations. As observed in these results, tensile strength and elongation at break follow opposite trends in uncrosslinked and cross-linked formulations with MAGNIFIN H10A and Ultracarb LH 15X. It is deduced that a proper mixture of MAGNIFIN H10A and Ultracarb LH 15X in EVA based matrix polymer composites may result in proper tensile strength and elongation at break.

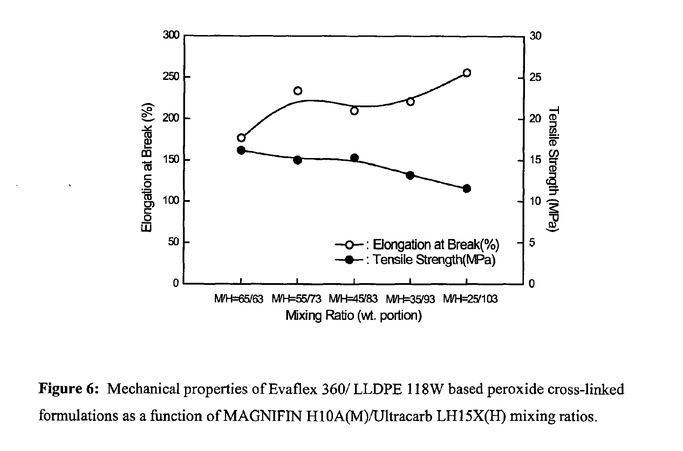

**Figure 6** shows the difference in mechanical properties when different ratio mixtures of MAGNIFIN H10A/Ultracarb LH 15X are used. Tensile strength decreases and elongation at break increases with increase of Ultracarb LH 15X content.

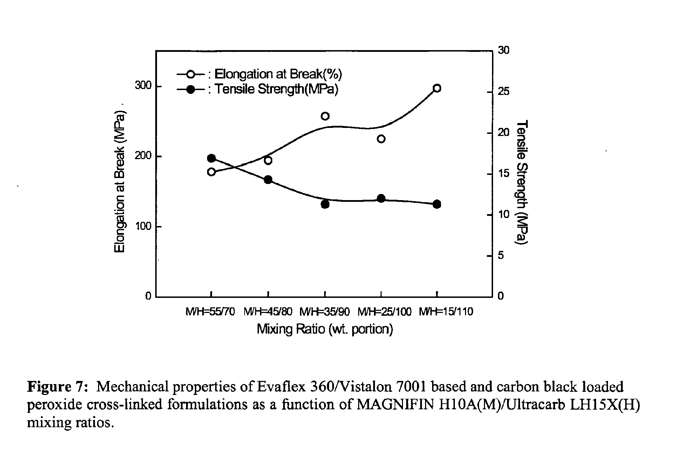

**Figure 7** shows the mechanical properties are changed with change of MAGNIFIN H10A/Ultracarb LH 15X mixing ratios. The trends of change in mechanical properties are almost the same as those of EXAMPLE 1 which do not contain carbon black. Namely, tensile strength decreases and elongation at break increases with increase of Ultracarb LH 15X content. Mixing ratios of 80/45, 90/35 and 100/25(MAGNIFIN H10A/Ultracarb LH 15X) (Run number 7, 8 and 9) formulations show excellent tensile strength and elongation at break with very high flame retardancy. All formulations meet V-0 of UL 94 tests and show very high LOI over 38%. Besides, electrical properties of all formulations are also superior.

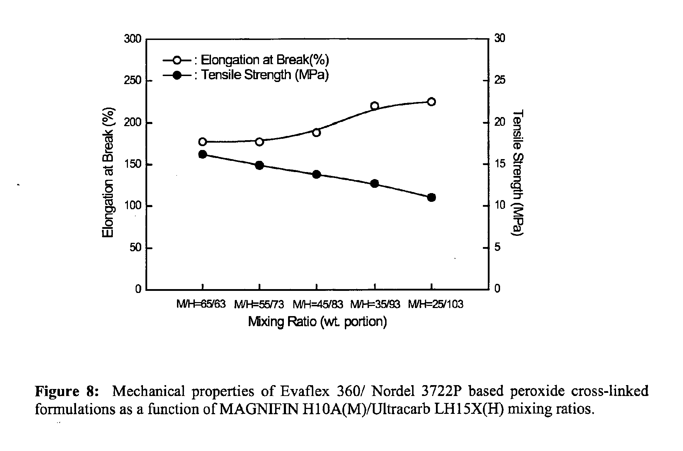

As shown in **Figure 8****,** similar to EXAMPLE 1 results, mechanical properties are changed with change of MAGNIFIN H10A/Ultracarb LH 15X mixing ratios. Tensile strength decreases and elongation at break increases with increase of Ultracarb LH 15X content. Moreover, all formulations show very high flame retardancy with LOI over 37% and all formulations meet V-0 of UL 94 tests.

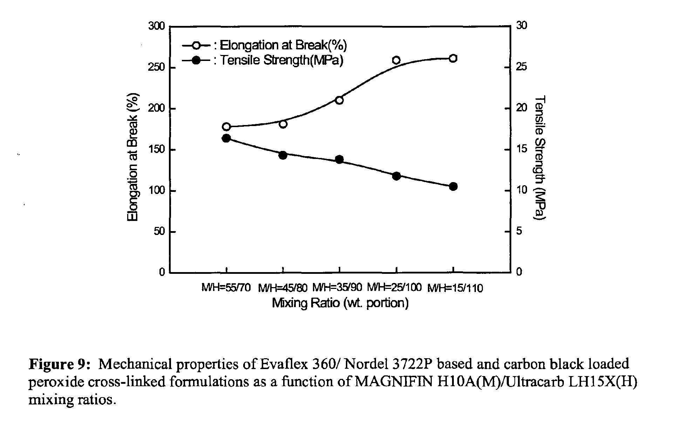

**Figure 9** shows the mechanical properties are changed with change of MAGNIFIN H10A/Ultracarb LH 15X mixing ratios. The trends of changing mechanical properties are almost the same as those of EXAMPLEs 1-3, i.e., tensile strength decreases and elongation at break increases with increase of Ultracarb LH 15X content.

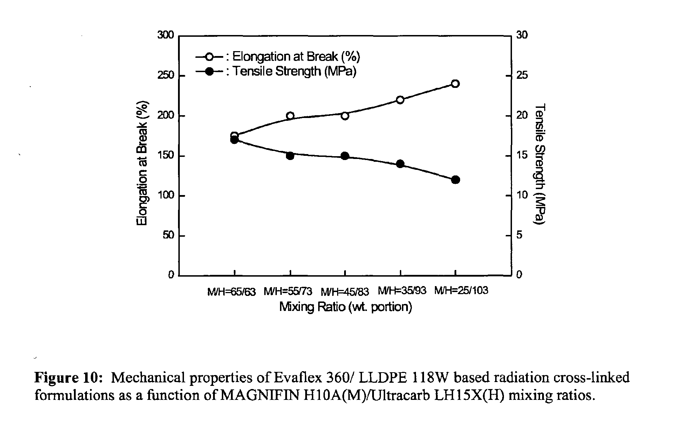

**Figure 10** shows, similar results as peroxide cross-linked formulations, mechanical properties are changed with change of MAGNIFIN H10A/Ultracarb LH 15X mixing ratios. The trends of change in mechanical properties are almost similar to those of peroxide cross-linked formulations, i.e., tensile strength decreases and elongation at break increases with increase of Ultracarb LH 15X content. Moreover, all formulations show very high flame retardancy meeting V-0 of UL 94 tests. From the results of mechanical properties and flame retardancy of radiation cross-linking formulations, it is concluded that various MAGNIFIN H10A/Ultracarb LH 15X mixed formulations are promising in radiation cross-linking clean flame retardant composites.

Other features of the present embodiments will be apparent from accompanying drawings and from the detailed description that follows.

### DETAILED DESCRIPTION

There are two types of clean flame retardant materials for wire and cable, i.e., thermoplastic (without cross-linking) and thermosetting (with cross-linking). This invention relates to thermosetting type clean flame retardant material for wire and cable. More particularly, the influence of various types of flame retardants on flammability and mechanical properties of various cross-linkable compounds such as Di cumyl peroxide (DCP) and electron beam radiation are investigated. Mechanical properties are mainly influenced by the type of flame retardants used in cross-linked clean flame retardant compositions. Tensile strength increases and elongation at break decreases with higher amount of MAGNIFIN H10A content. On the other hand, elongation at break increases and tensile strength decreases with higher amount of Ultracarb LH 15X content. For example, elongation at break of Ultracarb LH 15X formulations is much higher than those of MAGNIFIN H10A formulations after cross-linking by both dicumyl peroxide and radiation. Elongation at break of Ultracarb LH 15X formulations is almost 3-4 times higher than MAGNIFIN H10A formulations after cross-linking. In another example of a composition, MAGNIFIN H10A formulations show much higher tensile strength than Ultracarb LH 15X formulations after cross-linking. However, this influence is not observed for uncross-linked composites or different flame retardant combinations.

The current invention relates to thermosetting type clean flame retardant compositions for wire and cable. More particularly, this invention relates to thermosetting heavy duty type clean flame retardant compositions which have very high flame retardancy with superior mechanical properties. The invented clean flame retardant compositions are particularly suitable for use in enhanced cable insulations meeting BS 7211 and MIL C-24643 for thermosetting standards requirement for compounds. In general, clean flame retardant compositions are composed of 100 parts polymer (EVA (Ethylene Vinyl Acetate), EVA/polyethylene, EEA (Ethylene Ethyl Acrylate)/polyethylene or Ethylene Alpha Olefin/polyethylene) by weight and 100-150 parts inorganic flame retardants such as magnesium hydroxide, aluminum hydroxide and huntite hydromagnesite by weight, 2-20 parts intumescent flame retardants such as red phosphorus, zinc borate, and boric acid by weight, 0.5-1.5 parts antioxidants by weight. Additionally coloring agent, weathering protection agent, processing aid, coupling agent, lubricant and thermal stabilizer are compounded by the special applications. In the case of thermosetting, cross-linking agents such as peroxide compound is used for chemical cross-linking. Acrylate compound is used for radiation cross-linking are compounded with the above composition.

Polymer portion of total compound in clean flame retardant compositions is under 50% by weight.

In addition, the particle size of most flame retardants used in clean flame retardant compositions are under 50µm with various typical particle structures. Excellent dispersion of polymer/flame retardants is very important to obtain superior mechanical properties. When polymer/flame retardants are well mixed in the compounding process, it is assumed that the arrangement of polymer and flame retardants is very well balanced. The well balanced and specific arrangement of two different types of particle structures of flame retardants may improve the mechanical properties in high filled compositions.

This invention pertains to unique formulation and processing method of clean flame retardant material for wire and cable. The present invention may lead to improved mechanical properties, particularly tensile strength and elongation break without deteriorating flame retardancy.

Compositions comprise of 100 parts by weight of resin (polyolefin or 100 parts by weight of polyolefin/EPDM), 90-150 parts by weight of MAGNIFIN H10A/Ultracarb LH 15X as main flame retardants, 1-20 parts by weight of auxiliary secondary flame retardant agents and 0.2-1.0 parts by weight of antioxidants. Different mechanical properties may be obtained by mixing different ratios of MAGNIFIN H10A/Ultracarb LH 15X in peroxide cross-linked or radiation cross-linked clean flame retardant compositions. Higher tensile strength can be obtained by higher MAGNIFIN H10A content while higher elongation at break can be obtained by higher Ultracarb LH 15X content. The invented compositions show excellent mechanical properties, flame retardancy, thermal properties, electrical properties and process ability for meeting the stringent specification requirement of wire and cable industry.

These invented compositions are successfully processed by both cross-linking methods such as routine extruder/continuous cross-linking system and radiation cross-linking system. The cross-linked products by both methods show excellent mechanical properties and flame retardancy. The present invention demonstrates a reliable method for producing thermosetting clean flame retardant insulation composites for wire and cable without deterioration of mechanical and electrical properties.

This invention relates to non toxic, halogen free thermosetting flame retardant compositions for insulation materials of wire and cable. More particularly, this invention relates to clean flame retardant compositions for increasing mechanical properties without deterioration of flame retardancy. These compositions can be applied for continuous vulcanization system which is cross-linked by peroxide compound or radiation cross-linking system by electron beam. These compositions are also suitable for use in enhanced clean flame retardant cable insulations meeting representative world-wide specifications for thermosetting compounds requirements.

Wire and cable insulations are required to meet not only electrical properties but also mechanical properties. In general, wire and cable for electrical or electronic applications requires much higher mechanical properties compared to general grade building products. Most of jackets for general grade wire and cable in building is made of thermoplastic material. Wire and cable for electrical or electronic applications require cross-linked materials to obtain much higher thermal resistance and mechanical properties.

Moreover, the test conditions of thermal aging for clean flame retardant insulation materials for electrical or electronic applications is much more severe than that of general grade for building materials. Thermal aging test condition of clean flame retardant insulation materials (cross-linked materials) for electrical or electronic facilities is 136°C for 168 hours while that of general for building materials (uncross-linked materials) is 100°C for 168 hours. To pass the severe condition of 136°C for 168 hours, the materials may have to be cross-linked.

Table 1 shows that higher mechanical properties (higher tensile strength and higher elongation at break) are a requirement in clean flame retardant insulation materials for electrical or electronic applications as compared to general grade for building materials.

Table 1: Specifications focusing on mechanical properties in thermoplastic and thermosetting clean flame retardant insulation materials for wire and cable.

| Test Items | | | IEC 60502 (1KV-30KV)/ BS 6724, BS 7655 | BS 7211, MIL C-24643 |
|---|---|---|---|---|
| Room temperature | Tensile strength (MPa), minimum | | 8.8 | 9.1-9.8 |
| | Elongation at break(%), minimum | | 100-125 | 125-160 |
| After aging in an air oven | Tensile strength | Value after aging(MPa), minimum | 8.8 | |
| | | Variation(%), maximum | 40 | 30-40 |
| | Elongation at break | Value after aging(%) minimum | 100 | |
| | | minimum Variation(%), maximum | 40 | 30-40 |
| Thermal aging test conditions | | | 100°C for 168 hours | 136°C for 168 hours |

In general, polyethylene (PE) and polyvinylchloride (PVC) compounds are some of the best materials for wire and cable insulations because of their excellent electrical and mechanical properties. However, each of the materials have some draw backs such as low flame retardancy or generation of toxic gases during fire. PE is very easily flammable and generates less toxic gases during burning. On the contrary, PVC generates a lot of toxic gases but posses' good flame retardancy qualities. Many attempts have been previously made to find a flame retardant material, which does not generate toxic gases for wire and cable insulation materials, which are generally known as halogen free flame retardant compounds (HFFR compounds), clean flame retardant materials and non toxic flame retardant materials.

Clean flame retardant materials may be made from special formulations which are based on halogen and toxicity free chemicals in order to restrict the generation of toxic smoke. Clean flame retardant compositions comprise of non halogen containing matrix polymers, main flame retardants, secondary flame retardants, intumescent flame retardants, processing aids and antioxidants.

Current commercial clean flame retardant materials posses unstable mechanical properties and high flame retardancy because of the high filler content. Clean flame retardant materials contain relatively high content of flame retardants consisting of inorganic materials. High content of flame retardants are needed to achieve commercially acceptable flame retardancy for wire and cable applications. However, high content of flame retardants lead to major deterioration in mechanical properties. On the other hand, insulation and jacket materials for wire and cable should meet appropriate tensile strength, elongation at break, thermal resistance and flame retardancy to maintain durability. Moreover, as described in Table 1, the requirement of thermosetting clean flame retardant materials are much higher than those of thermoplastic materials.

The compositions of clean flame retardant materials comprise of EVA(ethylene vinyl acetate), EVA/LDPE(low density polyethylene)(or LLDPE (linear LDPE), ethylene alpha olefin or ethylene ethyl acrylate as matrix polymer because of high flame retardants load-ability which can increase the flame retardancy. Main flame retardants are mostly comprise of inorganic materials, such as, aluminum trihydroixide (ATH), magnesium hydroxide (MH) and huntite hydromagnesite (HH) because of their high decomposition temperature and smoke suppress-ability for clean flame retardant materials. However, more than 50% w/w loading of main flame retardants is required to achieve high flame retardancy. High contents of flame retardants can cause interfacial problems between matrix polymer and flame retardants, which can be a major determinant to influence the mechanical properties.

Various studies were performed to improve mechanical properties and flame retardancy, such as, by using organic encapsulated flame retardants. (Chang S, et al., Du L et al., Liu Y, et al., Laoutid F et al., Ma H et al., Beyer G., Szep A et al.).

In addition, for providing an efficient system for flame retardant composites, low contents of nano fillers such as partial substitution of flame retardants by organo-modified montmorillonite were also performed. (H. Ma,et al. A. Szep, et al., G. Beyer et al., H. Gui, et al., J.W. Gilman, et al., F. Laoutid et al. C.M. Jiao,et al., Z.Z. Wang, et al.). Nevertheless, most of studies focus on one aspect which is to improve flame retardancy. Additional treatment of flame retardants or mixing with special chemicals increases cost performance of final products.

Most of wire and cable specification requirements for clean flame retardant materials require not only excellent mechanical properties but also high flame retardancy. For example, the minimum required tensile strength is 8.8Mpa and minimum elongation at break is 125% based on IEC 60502 and BS 6724, 7655 for thermoplastic clean flame retardant materials. Minimum tensile strength is 9.8MPa, minimum elongation at break is 125% based on BS7211 and minimum tensile strength is 9.1MPa, minimum elongation at break is 165% based on MIL C-24643 for thermosetting clean flame retardant materials. As described in specifications, the most important factors of clean flame retardant materials are mechanical properties and flame retardancy. Without satisfying these two important factors, the clean flame retardant materials cannot be suitable to be used as a wire and cable composite.

Three different cross-linking methods are widely used in wire and cable industry at present. These methods are continuous vulcanization by peroxide compound, moisture vulcanization by silane compound and room temperature cross-linking by electron beam radiation. Continuous vulcanization by peroxide compound and room temperature cross-linking by electron beam radiation are widely used in high filled compositions such as clean flame retardant materials.

To investigate the relationships between cross-linking degree and mechanical properties of base matrix polymer, study of electron beam radiation cross-linking experiments were conducted and are shown in pre-test EXAMPLEs 1 and 2. Electron beam radiation cross-linking is selected in these experiments because control of cross-linking degree in this method is easier compared the peroxide cross-linking method.

Pre-test EXAMPLE 1 shows the relationship between mechanical properties and gel content of EVA as a function of radiation dose. It is found that tensile strength increases with increase of dose up to 100 kGy and then decreases with increase of dose. Elongation at break decreases with increase of dose. In case of EVA, it is considered that degradation reaction can occur starting from 150kGy.

Pre-test EXAMPLE 1

| Content / Property | P-1 | P-2 | P-3 | P-4 | P-5 |
|---|---|---|---|---|---|
| Evaflex 360 | 100 | 100 | 100 | 100 | 100 |
| Irganox1010 | 1 | 1 | 1 | 1 | 1 |
| | | | | | |
| Radiation dose (kGy) (air atmosphere) | 0 | 50 | 100 | 150 | 200 |
| | | | | | |
| Tensile strength (MPa) | 26 | 28 | 27 | 25 | 26 |
| Elongation at break(%) | 850 | 600 | 540 | 510 | 490 |
| Gel % | 0 | 36 | 67 | 73 | 82 |

Pre-test EXAMPLE 2 shows the relationship between mechanical properties and gel content of EVA based 150phr H10A formulations as a function of radiation dose. Similar results of Pre-test EXAMPLE 1 are obtained. Tensile strength increases and elongation at break decreases with increase of dose. From both pre-tests, it is found that the optimum radiation dose for MAGNIFIN H10A contained formulations is in the range 100-150 kGy.

Pre-test EXAMPLE 2:

| Content / Property | P-6 | P-7 | P-8 | P-9 | P-10 |
|---|---|---|---|---|---|
| Evaflex 360 | 100 | 100 | 100 | 100 | 100 |
| MAGNIFIN H10A | 150 | 150 | 150 | 150 | 150 |
| Irganox1010 | 1 | 1 | 1 | 1 | 1 |
| | | | | | |
| Radiation dose (kGy) (air atmosphere) | 0 | 50 | 100 | 150 | 200 |
| | | | | | |
| Tensile strength(MPa) | 12 | 16 | 18 | 19 | 20 |
| Elongation at break (%) | 150 | 200 | 190 | 170 | 140 |
| Gel % | 0 | 33 | 60 | 74 | 75 |

The following conventional clean flame retardant formulations in EXAMPLEs demonstrate certain problems as discussed in the following paragraphs.

As examples, four different types of flame retardants are investigated, such as MAGNIFIN A H10A (magnesium hydroxide, formula: Mg(OH)₂ producer: Albemarle/France), Ultracarb LH 15X(huntite hydromagnesite, formula: Mg₃ Ca(CO₃)₄, Mg₅(CO₃)₄(OH)₂.3H₂O, producer: Minelco/USA) and KISUMA 5B(magnesium hydroxide, formula: Mg(OH)₂, Producer: Kyowa Chemical/Japan) and H-42M(aluminum trioxide, Al₂O₃, Producer: Showa chemical/Japan).

Evaflex 360 (ethylene vinyl acetate, producer: DuPont-Mitsui Polychemicals Co/Japan, vinyl acetate content: 25 %, melt mass-flow rate (MFR) (190 °C/2.16 kg): 2.0 g/10 min) and LLDPE 118(melt flow index: 1.0 g/10 min, producer: SABIC/Saudi Arabia) are used as base polymers. Irganox 1010(chemical name: pentaerythritol tetrakis(3(3,5-di tert-buty-4-hydroxyphenyl)propionate, producer: CIBA specialty chemicals/Switzerland, melting range: 110-125 °C) is used as antioxidant. Perkadox BC-FF (DCP (Di Cumyl Peroxide), AKZO NOBEL, Netherlands) is used as chemical crosslinking agent. SR-350 (TMPTMA(Trimethylolpropane trimetharcrylate), Sartomer/U.S.A.) is used as co-crosslinking agent in radiation crosslinking. Exolit RP 692 (red phosphorus masterbatch, producer: Clariant/France, phosphorus content: approx. 50 % (w/w)), Firebrake ZB (zinc borate, producer: Borax/USA) and Boric Acid (Producer: Rose Mill Chemicals & Lubricant/USA) are used as intuescent flame retardants.

Test specimens were prepared as follows, EVA pellets were melted and mixed in Internal Mixer 350S (Brabender Co., Germany) for one minute at 120°C at a speed of 40 rpm. Then flame retardants and antioxidant were mixed with melted EVA for 10 minutes at 120°C. Pre-mixed compounds were moved to Two Roll Mill (Brabender Co., Germany) for fine blending with cross-linking agent (DCP: Di Cumyl Peroxide). Temperature of two roll mill was 120°C. Then, mixture was moved to hot press and compressed at 165°C for 20 minutes. Sheets of test specimen were prepared with dimensions of 110 mm x 185 mm and thickness of 2 mm. Specimens of uncross-linked formulations were prepared in similar way to chemical cross-linking method excluding the cross-linking agent. Hot compression was made at 150°C for 10 minutes. Test specimens of radiation cross-linking were prepared similar to uncross-linked formulations. Radiation cross-linking was performed at Sure Beam Middle East Co. in Riyadh, Saudi Arabia using vertically double Electron Beam Accelerators of 10 MeV. The irradiation dose was controlled by successive passes of 25kGy at ambient temperature in air.

Mechanical properties (tensile strength and elongation at break) were measured using a universal testing machine Model 5543 from Instron, USA in accordance with ASTM D 638M with testing conditions: speed of 500 mm/minute at 25°C. Gel content was measured by using Soxhlet extraction technique in xylene (130°C) in accordance with ASTM 2765. Limiting Oxygen Index (LOI) is one of the simplest methods to evaluate the flame retardancy of materials. LOI was performed using an apparatus of Fire Testing Technology limited (Incorporating Stanton Redcroft), UK in accordance with ISO 4589 and ASTM D 2863. LOI corresponds to the minimum percentage of oxygen needed for the combustion of specimens (80 x 10 x 1 mm) in an oxygen-nitrogen atmosphere. The other method to evaluate the flame retardancy of materials is UL 94 Flammability standard by Underwriters Laboratories, USA. UL-94 test was performed using a flammability chamber of CEAST Co., Italy, in accordance with ASTM D 635 for horizontal and ASTM D 3801 for vertical test positions. The standard classifies plastics according to how they burn in various orientations and thicknesses. From lowest (least flame-retardant) to highest (most flame-retardant), the classifications are shown in below.

Table 2: Standard Classification of material based on their orientation and thickness:

| Standard Classification | Description | Conditions allowed |
|---|---|---|
| HB | Slow burning on a horizontal specimen; burning rate <76 mm/min for thickness < 3 mm | |
| V2 | Burning stops within 30 seconds on a vertical specimen | Drips of flaming particles are allowed |
| V1 | Burning stops within 30 seconds on a vertical specimen | No drips allowed |
| V0 | Burning stops within 10 seconds on a vertical specimen | No drips allowed |

Conventional EXAMPLE 1 shows mechanical properties and flame retardancy of conventional radiation crosslinkable clean flame retardant compositions. The reason of using LDPE (or LLDPE) in base polymers is to maintain proper mechanical properties at the state of thermoplastic clean flame retardant compositions before cross-linking reaction. In general, high filler mixable polymers, such as EVA are very soft at room temperature. Therefore, it is apparent that using only very soft grade polymers without any rigid grade polymers in base polymers can easily distort the shape of product. To achieve appropriate rigidity, the addition of high temperature grade polymer such as polyethylene is required.

It was found that elongation at break decreases with increase of secondary flame retardants content. As known, it is quite difficult to satisfy V-0 level of UL94 test by using only main flame retardants without secondary flame retardants. However, when the main flame retardants and secondary flame retardants are used together to satisfy V-0 level of UL94 test, very poor elongation at break is obtained. As described, specification of thermosetting clean flame retardant materials of wire and cable requires minimum tensile strength: 9.8MPa/minimum elongation at break: 125% and high flame retardancy. It is well known that the most important factors of clean flame retardant materials of wire and cable are mechanical properties and flame retardancy. Without satisfying these two important factors, the clean flame retardant materials are not suitable for wire and cable applications.

Conventional EXAMPLE 1

| Content / Property | C-1 | C-2 | C-3 | C-4 |
|---|---|---|---|---|
| Evaflex 360 | 80 | 80 | 80 | 80 |
| LLDPE 118 | 20 | 20 | 20 | 20 |
| MAGNIFIN H10A | 120 | 120 | 120 | 120 |
| Secondary flame retardants (Zinc borate, Boric acid, Red phosphorus, Ammonium polyphosphate type) | 15 | 25 | 35 | 45 |
| Irganox1010 | 1 | 1 | 1 | 1 |
| TMPTMA SR-350 | 5 | 5 | 5 | 5 |
| | | | | |
| Dose (kGy) (air atmosphere) | 150 | | | |
| | | | | |
| Tensile strength(MPa) | 18 | 19 | 19 | 19 |
| Elongation at break(%) | 85 | 80 | 75 | 70 |
| LOI (%) | 32 | 33 | 35 | 36 |
| UL 94 test | H-B | V-1 | V-0 | V-0 |

Conventional EXAMPLEs 2-5 show mechanical properties and flame retardancy of conventional peroxide crosslinkable clean flame retardant compositions with different flame retardants. Similar to conventional radiation crosslinkable clean flame retardant compositions, mechanical properties decrease with increase of secondary flame retardants content. Moreover, it is a challenge to meet the minimum tensile strength: 9.8MPa and minimum elongation at break : 125% while at the same time passing V-0 level of UL94 test. To pass V-0 of UL 94 test, higher than 120phr content of main flame retardants with secondary (intumescent) flame retardants such as red phosphorus, zinc borate, boric acid and (or) etc. should be compounded. However, additional main and intumescent flame retardants lead to decrease in mechanical properties in spite of increasing flame retardancy as shown in conventional EXAMPLEs.

It is found that conventional radiation or peroxide crosslinkable clean flame retardant compositions cannot satisfy both mechanical properties and flame retardancy. There is a need to develop new compositions which maintain good mechanical properties with improved flame retardancy in thermosetting clean flame retardant compositions. In our present invention, new thermosetting clean flame retardant compositions which satisfy mechanical properties and high flame retardancy are shown.

Conventional EXAMPLE 2

| Content / Property | C-5 | C-6 | C-7 | C-8 |
|---|---|---|---|---|
| Evaflex 360 | 90 | 90 | 90 | 90 |
| LLDPE 118 | 10 | 10 | 10 | 10 |
| MAGNIFIN H10A | 120 | 120 | 120 | 120 |
| Secondary flame retardants (Zinc borate, Boric acid, Red phosphorus, Ammonium polyphosphate type) | 15 | 25 | 35 | 45 |
| Irganox1010 | 1 | 1 | 1 | 1 |
| Perkadox BC-FF | 3 | 3 | 3 | 3 |
| | | | | |
| Tensile strength(MPa) | 17 | 18 | 19 | 20 |
| Elongation at break(%) | 100 | 90 | 85 | 75 |
| LOI (%) | 35 | 37 | 40 | 43 |
| UL 94 test | H-B | V-0 | V-0 | V-0 |

Conventional EXAMPLE 3

| Content / Property | C-9 | C-10 | C-11 | C-12 |
|---|---|---|---|---|
| Evaflex 360 | 90 | 90 | 90 | 90 |
| LLDPE 118 | 10 | 10 | 10 | 10 |
| Ultracarb LH 15X | 120 | 120 | 120 | 120 |
| Secondary flame retardants (Zinc borate, Boric acid, Barium strearate, Red phosphorus, Ammonium polyphosphate type) | 15 | 25 | 35 | 45 |
| Irganox1010 | 1 | 1 | 1 | 1 |
| Perkadox BC-FF | 3 | 3 | 3 | 3 |
| | | | | |
| Tensile strength(MPa) | 9 | 9 | 8.5 | 8 |
| Elongation at break(%) | 450 | 420 | 400 | 365 |
| LOI (%) | 34 | 36 | 40 | 42 |
| UL 94 test | H-B | V-1 | V-0 | V-0 |

Conventional EXAMPLE 4

| Content / Property | C-13 | C-14 | C-15 | C-16 |
|---|---|---|---|---|
| Evaflex 360 | 90 | 90 | 90 | 90 |
| LLDPE 118 | 10 | 10 | 10 | 10 |
| KISUMA 5B | 120 | 120 | 120 | 120 |
| Secondary flame retardants (Zinc borate, Boric acid, Barium strearate, Red phosphorus, Ammonium polyphosphate type) | 15 | 25 | 35 | 45 |
| Irganox1010 | 1 | 1 | 1 | 1 |
| Perkadox BC-FF | 3 | 3 | 3 | 3 |
| | | | | |
| Tensile strength(MPa) | 9 | 8 | 8 | 8 |
| Elongation at break(%) | 440 | 415 | 400 | 360 |
| LOI (%) | 33 | 36 | 39 | 40 |
| UL 94 test | H-B | V-1 | V-0 | V-0 |

Conventional EXAMPLE 5

| Content / Property | C-17 | C-18 | C-19 | C-20 |
|---|---|---|---|---|
| Evaflex 360 | 90 | 90 | 90 | 90 |
| LLDPE 118 | 10 | 10 | 10 | 10 |
| H-42M | 120 | 120 | 120 | 120 |
| Secondary flame retardants (Zinc borate, Boric acid, Barium strearate, Red phosphorus, Ammonium polyphosphate type) | 15 | 25 | 35 | 45 |
| Irganox1010 | 1 | 1 | 1 | 1 |
| Perkadox BC-FF | 3 | 3 | 3 | 3 |
| | | | | |
| Tensile strength(MPa) | 10 | 9 | 9 | 8 |
| Elongation at break(%) | 485 | 470 | 470 | 460 |
| LOI (%) | 29 | 30 | 35 | 36 |
| UL 94 test | H-B | V-H | V-1 | V-1 |

The current invention relates to thermosetting (not thermoplastic) type clean flame retardant materials for wire and cable. Practical problems of commercial cross-linkable clean flame retardant materials in wire and cable insulation applications are showing unstable mechanical properties because of high filler contents.

In general, most of commercial cross-linkable clean flame retardant materials in wire and cable insulations have 100 parts by weight of polymer, 90-150 parts by weight of non halogen content main flame retardant, 1-20 parts by weight of auxiliary secondary flame retardant agents, 2-4 parts by weight of cross-linking agent and 0.2-1.0 parts by weight of antioxidants. As shown in conventional EXAMPLEs, it is found that high contents of main and intumescent flame retardants lead to decrease in mechanical properties in spite of improved flame retardancy.

Various methods are attempted to improve mechanical properties of thermosetting clean flame retardant insulation compounds. The influence of different types of flame retardants on flammability and mechanical properties of various formulations cross-linked by dicumyl peroxide and electron beam radiation are investigated. It is found that mechanical properties are mainly influenced by types of flame retardants in cross-linked clean flame retardant composites, i.e., tensile strength increased with increase of MAGNIFIN H10A content while elongation at break decreased with increase of MAGNIFIN H10A content. These preliminary formulations and results are shown in Pre-EXAMPLEs.

Table 3: The main properties of MAGNIFIN H10A and Ultracarb LH15X are shown below:

| Property | Flame retardant | |
|---|---|---|
| | MH | HH |
| Chemical name | Magnesium hydroxide | Huntite hydromagnesite |
| Grade | MAGNIFIN H10A | Ultracarb LH15X |
| Chemical formula | Mg(OH)₂ | Mg₃ Ca(CO₃ )₄, Mg₅(CO₃)₄(OH)₂.3H₂O |
| Decomposition temperature by Thermal analysis, °C | 350 | 220 |
| Average particle size by Particle Analyzer, µm | 1.3 | 2.8 |
| Structure of particle by SEM | Spherical or partially spherical | Aggregated ellipsoidal micelles |
| Surface treatment | Yes | Yes |

Moreover, it was found that higher mechanical properties can be obtained by changing the mixing ratios of MAGNIFIN H10A/Ultracarb LH 15X in peroxide cross-linked or radiation cross-linked clean flame retardant composites. Higher tensile strength can be obtained by higher content of MAGNIFIN H10A, on the other hand, higher elongation at break can be obtained by higher Ultracarb LH 15X content. As shown in EXAMPLEs, our assumptions are confirmed. We are able to acheive satisfactory mechanical properties without losing flame retardancy in thermosetting clean flame retardant composites for wire and cable.

The present invention shows a reliable method for producing thermosetting clean flame retardant insulation materials for wire and cable without deterioration of mechanical properties and electrical properties. Produced cables by this invention meet most of thermosetting clean flame retardant material specification requirements. The invented clean flame retardant compositions are particularly suitable for use in enhanced cable insulations meeting most of thermosetting compound specification requirements.

Further investigations were done to deduce the relationships between properties and additives before and after cross-linking as a function of flame retardant content. Mechanical properties and flame retardancy before and after cross-linking as a function of flame retardant content are shown in pre-test EXAMPLEs 3-4 and Figures 2-3.

Pre-test EXAMPLE 3

| Content / Property | P-11 | P-12 | P-13 | P-14 | P-15 | P-16 | P-17 | P-18 |
|---|---|---|---|---|---|---|---|---|
| Evaflex 360 | 100 | 100 | 100 | 100 | 100 | 100 | 100 | 100 |
| MAGNIFIN H10A | 90 | 120 | 150 | 180 | 90 | 120 | 150 | 180 |
| Irgnox 1010 | 1 | 1 | 1 | 1 | 1 | 1 | 1 | 1 |
| Perkadox BC-FF | - | - | - | - | 3 | 3 | 3 | 3 |
| | | | | | | | | |
| Tensile strength(MPa) | 8 | 10 | 11.5 | 12 | 17.5 | 20 | 22 | 24 |
| Elongation at break(%) | 225 | 200 | 150 | 115 | 305 | 240 | 165 | 115 |
| LOI (%) | 26 | 33 | 41 | 44 | 24 | 30 | 38 | 40 |

Pre-test EXAMPLE 4

| Content / Property | P-19 | P-20 | P-21 | P-22 | P-23 | P-24 | P-25 | P-26 |
|---|---|---|---|---|---|---|---|---|
| Evaflex 360 | 100 | 100 | 100 | 100 | 100 | 100 | 100 | 100 |
| Ultracarb LH 15X | 90 | 120 | 150 | 180 | 90 | 120 | 150 | 180 |
| Irganox1010 | 1 | 1 | 1 | 1 | 1 | 1 | 1 | 1 |
| Perkadox BC-FF | - | - | - | - | 3 | 3 | 3 | 3 |
| | | | | | | | | |
| Tensile Strength(MPa) | 7 | 8 | 9 | 10 | 14.5 | 10 | 10 | 10 |
| Elongation at break(%) | 240 | 180 | 140 | 100 | 400 | 510 | 400 | 285 |
| LOI (%) | 25 | 29 | 36 | 40 | 25 | 33 | 42 | 43 |

In further investigations, the relationships between properties and additives before and after cross-linking as a function of flame retardant content are investigated. Mechanical properties and flame retardancy before and after cross-linking as a function of flame retardant content are shown in pre-test EXAMPLEs 3-4 and Figures 2-3.

It is apparent that mechanical properties are greatly influenced by both cross-linking and choice of flame retardants. Tensile strength is greatly improved by cross-linking in MAGNIFIN H10A formulations while elongation at break is greatly increased by cross-linking reaction in Ultracarb LH 15X formulations.

For the flame retardancy of uncross-linked and cross-linked formulations for various MAGNIFFN H10A and Ultracarb LH 15X contents, both flame retardants show excellent flame retardancy of compounds even though the influence of each flame retardant on mechanical properties by cross-linking is different. From the results, it is proposed that formulations of both flame retardant combinations show also excellent flame retardancy.

A solution for the influence of various processing conditions on mechanical properties for each flame retardant formulation was investigated and is presented as follows. Influence of processing conditions on mechanical properties for MAGNIFIN H10A formulations are investigated as shown in pre-test EXAMPLE 5. From this pre-test EXAMPLE, it is found that tensile strength remains almost constant for various processing conditions with limited variation between 11 - 12 MPa and elongation at break varies over the range 140 - 160 %. Consequently, it is clear that processing conditions do not affect significantly mechanical properties of uncross-linked MAGNIFIN H10A formulations.

Similarly, influence of processing conditions on mechanical properties for Ultracarb LH 15X formulations are investigated as shown in pre-test EXAMPLE 6. It was found that, similar to MAGNIFIN H10A formulations, tensile strength remains almost constant for various processing conditions and varies between 9 - 11 MPa and elongation at break varies over the range 120 - 140 % which is approximately 20% lower than those of MAGNIFIN H10A formulations. Accordingly, the influence of processing conditions on mechanical properties of Ultracarb LH 15X formulations is also negligible.

Pre-test EXAMPLE 5

| Content / Property | P-13a | P-13b | P-13c | P-13d | P-13e |
|---|---|---|---|---|---|
| | | | | | |
| Internal mixing | 120°C for 10min | 130°C for 10min | 140°C for 10min | 150°C for 10min | 160°C for 10min |
| Two roll mixing | 140°C for 10min | 150°C for 10min | 160°C for 10min | 170°C for 10min | 180°C for 10min |
| Pressing | 140°C for 8min | 150°C for 8min | 160°C for 8min | 170°C for 8min | 180°C for 8min |
| | | | | | |
| Tensile strength (MPa) | 11.5 | 11 | 12 | 12 | 12 |
| Elongation at break (%) | 150 | 150 | 145 | 145 | 160 |

Pre-test EXAMPLE 6

| Content / Property | | P-21a | P-21b | P-21c | P-21d | P-21e |
|---|---|---|---|---|---|---|
| | | | | | | |
| Internal mixing | | 120°C for 10min | 130°C for 10min | 140°C for 10min | 150°C for 10min | 160°C for 10min |
| Two roll mixing | | 140°C for 10min | 150°C for 10min | 160°C for 10min | 170°C for 10min | 180°C for 10min |

| Pressing | 140°C for 8min | | 150°C for 8min | 160°C for 8min | 170°C for 8min | 180°C for 8min |
|---|---|---|---|---|---|---|
| | | | | | | |
| Tensile strength (MPa) | | 9.5 | 10.5 | 9.5 | 10 | 10 |
| Elongation at break (%) | | 140 | 135 | 140 | 125 | 130 |

As observed by the results of several Pre-test EXAMPLEs, we conclude that as follows:
1) Mechanical properties of cross-linked formulations are greatly influenced by choice of flame retardant. However, processing conditions do not affect significantly mechanical properties of uncross-linked formulations for both flame retardants.
2) Tensile strength is greatly improved by cross-linking in MAGNIFIN H10A formulations, namely, tensile strength increases with increase of MAGNIFIN H10A content for cross-linked formulations.
3) Elongation at break is greatly increased by cross-linking in Ultracarb LH 15X formulations, namely, elongation at break of Ultracarb LH 15X cross-linked formulations are much higher than those of uncross-linked ones. However, tensile strength of Ultracarb LH 15X formulations are much lower than those of MAGNIFIN H10A formulations.
4) It is considered that formulations of combinations of both flame retardants will show excellent flame retardancy.
5) It is expected that satisfactory mechanical properties can be obtained by mixing of MAGNIFIN H10A/Ultracarb LH 15X in cross-linked clean flame retardant composites.

As shown in conventional EXAMPLEs, it is known that increasing flame retardants content can increase flame retardancy but may decrease mechanical properties specially elongation at break in thermosetting clean flame retardant compositions regardless of the type of flame retardant. Therefore, it is found that it is very difficult to obtain compositions which meet flame retardancy and mechanical properties. It is hard to obtain suitable formulations which pass V-0 of UL 94 test with satisfactory mechanical properties of minimum tensile strength 9.8 MPa and minimum elongation at break 165% based on BS 7211 and MIL C-24643 standard as shown in conventional EXAMPLEs. Moreover, in most cases, mechanical properties always slightly fluctuate after extrusion of wire and cable. The extrusion temperature can be influenced by seasonal environmental changes, speed and cable size are also changed by various specifications and client's requirements. Therefore, mechanical properties of clean flame retardant compositions should show at least 20-30% higher than normal specification values. When the mechanical properties just meet the specification values, the quality control range is very tight; accordingly, some products may fail specification requirements.

In our current invention, a new method is introduced instead of conventional formulations for increasing mechanical properties while maintaining high flame retardancy in peroxide cross-linked/radiation cross-linked thermosetting clean flame retardant compositions. This invention pertains to special formulations of thermosetting clean flame retardant composites of wire and cable. The present invention leads to improved mechanical properties without losing flame retardancy, particularly increasing elongation at break/tensile strength without deterioration of flame retardancy in peroxide cross-linked/radiation cross-linked thermosetting type clean flame retardant compositions.

From the results of Pre-test EXAMPLEs, namely, elongation at break of Ultracarb LH 15X formulations are much higher than those of MAGNIFIN H10A formulations while tensile strength of Ultracarb LH 15X formulations are lower than those of MAGNIFIN H10A formulations, it is proposed that the proper mixture of MAGNIFIN H10A and Ultracarb LH 15X in EVA based formulations can result in optimum tensile strength and elongation at break to obtain satisfactory mechanical properties and flame retardancy. As shown in EXAMPLE 1, various mixing ratios of MAGNIFIN H10A/Ultracarb LH 15X in Evaflex 360/ LLDPE 118W are prepared. Volume resistivity is measured at room temperature (25 °C) in accordance with ASTM D257 using high resistance meter of Model HP4339B, HP, USA.

As shown in EXAMPLE 1 and Figure 6, mechanical properties are changed with change of MAGNIFIN H10A/Ultracarb LH 15X mixing ratios. As expected, tensile strength decreases and elongation at break increases with increase of Ultracarb LH 15X content. Compared with conventional EXAMPLEs, much higher mechanical properties are obtained from MAGNIFIN H10A/Ultracarb LH 15X formulations.

Mixing ratios of 73/55, 83/45 and 93/35(MAGNIFIN H10A/Ultracarb LH 15X) (Run number 2, 3 and 4) formulations have high tensile strength of over 12MPa and elongation at break of over 200%. If accidental coincidence occurred in these formulations, they will never show any trends with changing of MAGNIFIN H10A/Ultracarb LH 15X mixing ratios. Instead, results show definite trends with change of MAGNIFIN H10A/Ultracarb LH 15X mixing ratios. In addition, thermal aging properties also show good results. Moreover, it is observed that all formulations of MAGNIFIN H10A/Ultracarb LH 15X mixing formulations show very high flame retardancy. Three formulations (Run number 2, 3 and 4) of 73/55, 83/45 and 93/35 (MAGNIFIN H10A/Ultracarb LH 15X) mixing ratios show very high flame retardancy and high mechanical properties. These formulations can be used in practical thermosetting clean flame retardant composites.

For the second step, carbon black contained formulations are investigated as shown in EXAMPLE 2. Many jacket compounds for wire and cable are black color for weathering protection. As shown in Figure 7, mechanical properties are changed with change of MAGNIFIN H10A/Ultracarb LH 15X mixing ratios. The trends of change in mechanical properties are almost the same as those of EXAMPLE 1 which do not contain carbon black. Namely, tensile strength decreases and elongation at break increases with increase of Ultracarb LH 15X content. Mixing ratios of 80/45, 90/35 and 100/25(MAGNIFIN H10A/Ultracarb LH 15X) (Run number 7, 8 and 9) formulations show excellent tensile strength and elongation at break with very high flame retardancy. All formulations meet V-0 of UL 94 tests and show very high LOI over 38%. Besides, electrical properties of all formulations are also excellent.

For re-confirming the influence of change in mixing ratios of MAGNIFIN H10A/Ultracarb LH 15X, the third step is conducted as shown in EXAMPLE 3. This EXAMPLE 3 reconfirms results of EXAPLE 1, i.e., all formulations are the same as EXAMPLE 1 formulations except that Nordel 3722P was used in place of LLDPE 118W. As shown in Figure 8, similar to EXAMPLE 1 results, mechanical properties are changed with change of MAGNIFIN H10A/Ultracarb LH 15X mixing ratios. Tensile strength decreases and elongation at break increases with increase of Ultracarb LH 15X content. Moreover, all formulations show very high flame retardancy with LOI over 37% and all formulations meet V-0 of UL 94 tests. From the results of mechanical properties and flame retardancy of Nordel 3722P loaded formulations, it is reconfirmed that various MAGNIFIN H10A/Ultracarb LH 15X mixing ratios show very promising results in thermosetting clean flame retardant composites.

For re-confirming the influence of change in mixing ratios of MAGNIFIN H10A/Ultracarb LH 15X, carbon black contained formulations are prepared as shown in EXAMPLE 4. All formulations are similar to EXAMPLE 2 formulations except that Nordel 3722P was used in place of Vistalon 7001. As shown in Figure 9, mechanical properties are changed with change of MAGNIFIN H10A/Ultracarb LH 15X mixing ratios. The trends of changing mechanical properties are almost the same as those of EXAMPLEs 1-3, i.e., tensile strength decreases and elongation at break increases with increase of Ultracarb LH 15X content. Moreover, similar to previous results, all formulations show very high flame retardancy with LOI over 40% and all formulations meet V-0 of UL 94 test. From the results of mechanical properties and flame retardancy of Nordel 3722P/carbon black loaded formulations, it is reconfirmed that various MAGNIFIN H10A/Ultracarb LH 15X mixing formulations are really promising in thermosetting clean flame retardant composites.

In conclusion, in thermosetting clean flame retardant composites, when MAGNIFIN H10A/Ultracarb LH 15X mixing formulations are compared with single flame retardants formulations (as shown in conventional EXAMPLEs), it is found that MAGNIFIN H10A/Ultracarb LH 15X mixing formulations show much higher mechanical properties than conventional formulations without loosing flame retardancy. For example, conventional formulations never meet V-0 of UL 94 test with tensile strength of over 12MPa and elongation at break of over 200% while MAGNIFIN H10A/Ultracarb LH 15X mixing formulations can easily meet both properties. From the results of EXAMPLE 1-4, it is found that peroxide cross-linked MAGNIFIN H10A/Ultracarb LH 15X mixing formulations show excellent mechanical properties/flame retardancy and these formulations are really promising in thermosetting clean flame retardant composites.

Similar experiments are conducted in radiation cross-linking formulations as shown in EXAMPLE 5 and Figure 10. Similar to peroxide cross-linked formulations, mechanical properties are changed with change of MAGNIFIN H10A/Ultracarb LH 15X mixing ratios. The trends of change in mechanical properties are almost similar to those of peroxide cross-linked formulations, i.e., tensile strength decreases and elongation at break increases with increase of Ultracarb LH 15X content. Moreover, all formulations show very high flame retardancy meeting V-0 of UL 94 tests. From the results of mechanical properties and flame retardancy of radiation cross-linking formulations, it is concluded that various MAGNIFIN H10A/Ultracarb LH 15X mixing formulations are also really promising in radiation cross-linking clean flame retardant composites.

The following non-limiting examples illustrate formulations of the inventive compositions.

EXAMPLE 1

| Content / Property | | 1 | 2 | 3 | 4 | 5 |
|---|---|---|---|---|---|---|
| Evaflex 360 | | 95 | 95 | 95 | 95 | 95 |
| LLDPE118W | | 5 | 5 | 5 | 5 | 5 |
| Ultracarb LH15X | | 63 | 73 | 83 | 93 | 103 |
| MAGNIFIN H10A | | 65 | 55 | 45 | 35 | 25 |
| Secondary flame retardants (Zinc borate, Boric acid, Barium strearate, Red phosphorus, Ammonium polyphosphate type) | | 25 | | | | |
| Irganox 1010 | | 1 | 1 | 1 | 1 | 1 |
| Perkadox BC-FF | | 3 | 3 | 3 | 3 | 3 |
| | | | | | | |
| Tensile strength(MPa) | | 16 | 15 | 15 | 13 | 12 |
| Elongation at break(%) | | 180 | 230 | 210 | 220 | 260 |
| Thermal aging at 136°C for 168hrs | Retention of tensile strength(%) | Over 80% | | | | |
| | Retention of elongation at break(%) | Over 80% | | | | |
| LOI (%) | | 40 | 39 | 38 | 38 | 38 |
| UL 94 test | | V-0 | V-0 | V-0 | V-0 | V-0 |
| Volume resistivity (ΩCm) | | 2 x 10¹⁵ | 1 x 10¹⁵ | 9 x 10¹⁴ | 7 x 10¹⁴ | 7 x 10¹⁴ |

EXAMPLE 2

| Content / Property | | 6 | 7 | 8 | 9 | 10 |
|---|---|---|---|---|---|---|
| Evaflex 360 | | 95 | 95 | 95 | 95 | 95 |
| Vistalon 7001 | | 5 | 5 | 5 | 5 | 5 |
| Ultracarb LH15X | | 70 | 80 | 90 | 100 | 110 |
| Magnesium Hydroxide (H10A) | | 55 | 45 | 35 | 25 | 15 |
| Secondary flame retardants (Zinc borate, Boric acid, Barium strearate, Red phosphorus, Ammonium polyphosphate type) | | 25 | | | | |
| Carbon black 550 | | 5 | 5 | 5 | 5 | 5 |
| Irganox 1010 | | 1 | 1 | 1 | 1 | 1 |
| Perkadox BC-FF | | 3 | 3 | 3 | 3 | 3 |
| | | | | | | |
| Tensile strength(MPa) | | 16 | 14 | 12 | 12 | 13 |
| Elongation at break(%) | | 180 | 195 | 250 | 225 | 170 |
| Thermal aging at 136°C for 168hrs | Retention of tensile strength(%) | Over 80% | | | | |
| | Retention of elongation at break(%) | Over 80% | | | | |
| LOI (%) | | 42 | 41 | 40 | 40 | 39 |
| UL 94 test | | V-0 | V-0 | V-0 | V-0 | V-0 |
| Volume resistivity (ΩCm) | | 1 x 10¹⁵ | 1 x 10¹⁵ | 8 x 10¹⁴ | 8 x 10¹⁴ | 7 x 10¹⁴ |

EXAMPLE 3

| Content / Property | | 11 | 12 | 13 | 14 | 15 |
|---|---|---|---|---|---|---|
| Evaflex 360 | | 95 | 95 | 95 | 95 | 95 |
| Nordel 3722P | | 5 | 5 | 5 | 5 | 5 |
| Ultracarb LH15X | | 63 | 73 | 83 | 93 | 103 |
| Magnesium Hydroxide(H10A) | | 65 | 55 | 45 | 35 | 25 |
| Secondary flame retardants (Zinc borate, Boric acid, Barium strearate, Red phosphorus, Ammonium polyphosphate type) | | 25 | | | | |
| Irganox 1010 | | 1 | 1 | 1 | 1 | 1 |
| Perkadox BC-FF | | 3 | 3 | 3 | 3 | 3 |
| | | | | | | |
| Tensile strength(MPa) | | 16 | 15 | 14 | 13 | 11 |
| Elongation at break(%) | | 180 | 180 | 190 | 220 | 225 |
| Therma 1 aging at 136°C for 168hrs | Retention of tensile strength(%) | Over 80% | | | | |
| | Retention of elongation at break(%) | Over 80% | | | | |
| LOI (%) | | 40 | 40 | 40 | 39 | 39 |
| UL 94 test | | V-0 | V-0 | V-0 | V-0 | V-0 |
| Volume resistivity (ΩCm) | | 2 x 10¹⁵ | 1 x 10¹⁵ | 1 x 10¹⁵ | 1 x 10¹⁵ | 1 x 10¹⁵ |

EXAMPLE 4

| Content / Property | | 16 | 17 | 18 | 19 | 20 |
|---|---|---|---|---|---|---|
| Evaflex 360 | | 94 | 94 | 94 | 94 | 94 |
| Nordel 3722P | | 6 | 6 | 6 | 6 | 6 |
| Ultracarb LH15X | | 70 | 80 | 90 | 100 | 110 |
| Magnesium Hydroxide(H10A) | | 55 | 45 | 35 | 25 | 15 |
| Secondary flame retardants (Zinc borate, Boric acid, Barium strearate, Red phosphorus, Ammonium polyphosphate type) | | 25 | | | | |
| Carbon black 550 | | 5 | 5 | 5 | 5 | 5 |
| Irganox 1010 | | 1 | 1 | 1 | 1 | 1 |
| Perkadox BC-FF | | 3 | 3 | 3 | 3 | 3 |
| | | | | | | |
| Tensile strength(MPa) | | 16 | 14 | 14 | 12 | 10.5 |
| Elongation at break(%) | | 180 | 180 | 210 | 260 | 260 |
| Thermal aging at 136°C for 168hrs | Retention of tensile strength(%) | Over 80% | | | | |
| | Retention of elongation at break(%) | Over 80% | | | | |
| LOI (%) | | 42 | 41 | 41 | 41 | 39.5 |
| UL 94 test | | V-0 | V-0 | V-0 | V-0 | V-0 |
| Volume resistivity (ΩCm) | | 2 x 10¹⁵ | 2 x 10¹⁵ | 9 x 10¹⁴ | 9 x 10¹⁴ | 7 x 10¹⁴ |

EXAMPLE 5

| Content / Property | | 21 | 22 | 23 | 24 | 25 |
|---|---|---|---|---|---|---|
| Evaflex 360 | | 85 | 85 | 85 | 85 | 85 |
| LLDPE 118W | | 15 | 15 | 15 | 15 | 15 |
| | Ultracarb LH15X | 63 | 73 | 83 | 93 | 103 |
| MAGNIFIN H10A | | 65 | 55 | 45 | 35 | 25 |
| Secondary flame retardants (Zinc borate, Boric acid, Barium strearate, Red phosphorus, Ammonium polyphosphate type) | | 25 | | | | |
| Irganox 1010 | | 1 | 1 | 1 | 1 | 1 |
| TMPTMA SR-350 | | 5 | 5 | 5 | 5 | 5 |
| | | | | | | |
| Dose (kGy) (air atmosphere) | | 150 | | | | |
| | | | | | | |
| Tensile strength(MPa) | | 17 | 15 | 15 | 14 | 12 |
| Elongation at break(%) | | 175 | 200 | 200 | 220 | 240 |
| Thermal aging at 136°C for 168hrs | Retention of tensile strength(%) | Over 80% | | | | |
| | Retention of elongation at break(%) | Over 80% | | | | |
| LOI (%) | | 39 | 39 | 37 | 37 | 38 |
| UL 94 test | | V-0 | V-0 | V-0 | V-0 | V-0 |
| Volume resistivity (ΩCm) | | 1 x 10¹⁵ | 1 x 10¹⁵ | 8 x 10¹⁴ | 7 x 10¹⁴ | 7 x 10¹⁴ |

The compounding of above compositions is preferably processed as follows, namely, EVA and LLDPE are melted and mixed in internal mixer for four minutes at 150 °C. Then, rest of additives and flame retardants are mixed with already melted polymers for 10 minutes at 150 °C. The pre-mixed compounds are moved to two roll mill/guider cutter/pelletizing extruder and then pelletized. At this step, temperature of two roll mixer is kept around 150 °C and mixture is processed for 5-10 minutes. After pelletizing, Dicumyl peroxide is added to compounded pellets.

Cable insulation process of peroxide cross-linkable composites is conducted by general type continuous vulcanization line with the extrusion temperature of 120-140°C and cross-linking temperature of 200-250°C. Cable extrusion of radiation cross-linkable composites is conducted by general type cable extruder with the extruding temperature of 160-200°C and radiation cross-linked with radiation dose of 150 kGy. The extruding process is not different from routine thermoplastic method.

Cable extrusion of both cross-linkable composites show excellent process ability and surface smoothness for finished cables.

Although the present embodiments have been described with reference to specific example embodiments, it will be evident that various modifications and changes may be made to these embodiments without departing from the broader spirit and scope of the various embodiments. Accordingly, the specification and examples are to be regarded in a descriptive rather than a restrictive sense.

## Claims

1. A clean flame retardant composition comprising:
a polymer 100 parts by weight;
a main flame retardant 90-150 parts by weight;
an secondary flame retardant 1- 20 parts by weight;
an antioxidant 0.1-0.5 parts by weight;
a processing aid 1-10 parts by weight; and
a coloring agent 1-6 parts by weight.

2. A composition according to claim 1, wherein the composition is peroxide crosslinked by using a dicumyl peroxide.

3. A composition of according to claim 1, wherein the composition is crosslinked by radiation using a radiation dose of 150 kGy.

4. A composition according to claim 1, wherein the base polymer is at least one of EVA(ethylene vinyl acetate), EVA/polyethylene, ethylene alpha olefin, ethylene alpha olefin/polyethylene, ethylene ethyl acrylate, ethylene ethyl acrylate/polyethylene, EVA/polyethylene/EPDM, ethylene alpha olefin/polyethylene/EPDM or ethylene ethyl acrylate/polyethylene/EPDM.

5. A composition according to claim 1, wherein the base polymer is combination of EVA and LLDPE.

6. The composition according to claim 1, wherein the inorganic flame retardant is at least a combination of aluminum trihydroixide (ATH), magnesium hydroxide (MH), ultracarb LH15X and huntite hydromagnesite (HH).

7. The composition according to claim 1, wherein the main flame retardant has a combined ratio of more than 100 parts by weight of magnesium hydroxide and ultracarb LH15X.

8. The composition according to claim 7, wherein a mixing ratio of magnesium hydroxide to ultracarb LH15X is not 1:1 ratio.

9. A composition according to claim 1, wherein the secondary flame retardant is at least one of red phosphorus, zinc borate, boric acid and ammonium polyphosphate.

10. The composition according to claim 1, wherein the particle size of the main flame retardant is under 50uM.

11. A composition of claim 1, wherein the polymer content is less than 50% of the total composition parts by weight.

12. A method of making a thermosetting composition, comprising:
melting and mixing a combination of polymers for 10 minutes at 150°C
comprising:
a first polymer and a second polymer 100 parts by weight, wherein the
first polymer is EVA and the second polymer is LLDPE.

13. The method according to claim 12, further comprising:
adding the following to the combination polymer mixture that is melted;
a main flame retardant 90-150 parts by weight;
an secondary flame retardant 1- 20 parts by weight;
an antioxidant 0.1-0.5 parts by weight;
a processing aid 1-10 parts by weight; and
a coloring agent 1-6 parts by weight.
mixing for 10 minutes at 150°C.

14. The method according to claim 13, further comprising:
extruding at 150°C for 5-20 minutes.

15. The method of claim 14, further comprising:
adding a cross linking chemical, wherein the cross linking chemical is dicumyl
peroxide; and
cross-linking at 200-250°C.

16. The method of claim 14, further comprising:
radiation cross-linking with a dose of 150 kGy.

17. A cable comprising:
a wire;
an insulation sheath encompassing the wire, wherein the insulation sheath is
blended from a thermosetting extrudable composition comprising the following components:
a polymer 100 parts by weight;
a main flame retardant 90-150 parts by weight;
an secondary flame retardant 1- 20 parts by weight;
an antioxidant 0.1-0.5 parts by weight;
a processing aid 1-10 parts by weight; and
a coloring agent 1-6 parts by weight.

18. The cable according to claim 17, wherein the extruding temperature is maintained between 120°-200° C.

19. The cable according to claim 17, wherein the base polymer is less than 50% parts by weight, the inorganic flame retardant and the secondary flame retardant have a particle size that is under 50 um.

20. The cable according to claim 17, wherein the cross linking is performed by using a dicumyl peroxide as a chemical at 200-250°C.
